# EUROPÄISCHE PATENTSCHRIFT

(11) **EP 1 743 697 B1**
(45) Veröffentlichungstag und Bekanntmachung des Hinweises auf die Patenterteilung: **25.07.2007**
(21) Anmeldenummer: 06021062.2
(22) Anmeldetag: 28.05.2004
(51) Int. Cl.: B01J 35/04, F01N 3/28

(54) **Blechfolie mit Mikrostuktur**
Metal foil with microstructure
Bande métallique avec microstructure

(30) Priorität: 30.05.2003 DE 10324889
(43) Veröffentlichungstag der Anmeldung: 17.01.2007
(62) Teilanmeldung aus: 04739423.4
(73) Patentinhaber: Emitec Gesellschaft für Emissionstechnologie mbH, 53797 Lohmar (DE)
(72) Erfinder: Hodgson, Jan, 53840 Troisdorf (DE)
(74) Vertreter: Rössler, Matthias

(56) Entgegenhaltungen:
- WO-A-91/01178
- US-A- 5 045 403

## Beschreibung

Die vorliegende Erfindung betrifft eine Blechfolie, insbesondere für den Einsatz als Trägerkörper für ein katalytisch aktives Material zur Reinigung von Abgasen mobiler Verbrennungskraftmaschinen, das mindestens einen Schlitz umfasst, der sich nur in einem Innenbereich der Blechfolie erstreckt und zumindest teilweise eine Mikrostruktur der Blechfolie begrenzt, die aus einer Oberflächenstruktur der Blechfolie hinausragt.

Bei der Abgasbehandlung von mobilen Verbrennungskraftmaschinen, wie zum Beispiel Otto- und Dieselmotoren, ist es bekannt, Komponenten bzw. Strukturen in der Abgasleitung anzuordnen, die eine relativ große Oberfläche bereitstellen. Diese Komponenten werden üblicherweise mit einer adsorbierenden, katalytisch aktiven oder ähnlichen Beschichtung versehen, wobei aufgrund der großen Oberfläche der Komponenten ein inniger Kontakt mit dem vorbeiströmenden Abgas realisiert wird. Solche Komponenten sind beispielsweise Filterelemente zum Herausfiltern von im Abgas enthaltenen Partikeln, Adsorber zum zumindest zeitlich begrenzten Speichern von im Abgas enthaltenen Schadstoffen (z. B. NOₓ), katalytische Konverter (z. B. Drei-Wege-Katalysator, Oxidationskatalysator, Reduktionskatalysator, etc.), Diffusoren zur Strömungsbeeinflussung bzw. Verwirbelung des hindurchströmenden Abgases, oder auch Heizelemente, die gerade nach dem Kaltstart der Verbrennungskraftmaschine das Abgas auf eine vorgegebene Temperatur erwärmen. Im Hinblick auf die Einsatzbedingungen im Abgassystem eines Automobils haben sich grundsätzlich folgende Trägersubstrate bewährt: keramische Wabenkörper, extrudierte Wabenkörper und Wabenkörper aus Metallfolien. Aufgrund der Tatsache, dass diese Trägersubstrate an ihre Funktionen stets anzupassen sind, sind hochtemperaturfeste und korrosionsbeständige Blechfolien besonders gut geeignet als Ausgangsmaterial zu dienen.

Es ist bekannt, Wabenkörper mit einer Mehrzahl von zumindest teilweise strukturierten Blechfolien herzustellen, die anschließend in ein Gehäuse eingebracht werden und somit einen Trägerkörper bilden, der mit einer oder mehreren der oben genannten Beschichtungen versehen werden kann. Die zumindest teilweise strukturierten Blechfolien werden dabei so angeordnet, dass im wesentlichen parallel zueinander angeordnete Kanäle gebildet sind. Um dies zu gewährleisten, ist beispielsweise ein Teil der Blechfolien mit einer Primärstruktur bzw. Oberflächenstruktur versehen, welche sich u. a. durch eine regelmäßige, sich wiederholende Struktur auszeichnet, insbesondere eine Art Sinus-Wellung, eine Sägezahn-Struktur, eine Rechteck-Wellung, eine Dreiecks-Wellung, eine Omega-Wellung, od. dgl.. Diese mit einer Primärstruktur versehenen Blechfolien werden dann (ggf. abwechselnd mit glatten Zwischenlagen) aufeinander gestapelt, miteinander verbunden und in ein Gehäuse eingefügt. Auf diese Weise ist ein Wabenkörper gebildet, der im wesentlichen zueinander parallele Kanäle aufweist.

Weiter ist bekannt, eine zweite Struktur in derartige Blechfolien einzubringen, die insbesondere verhindern soll, dass sich unmittelbar nach Eintritt des Abgases in den Wabenkörper eine laminare Strömung ausbildet, wobei ein Gasaustausch von im Zentrum eines solchen Kanals liegenden Bereichen des Teilabgasstroms mit den z.B. katalytisch aktiven Kanalwandbereichen nicht stattfindet. Diese Sekundärstruktur bzw. Mikrostruktur stellt demnach Anströmflächen bereit, die eine Art Verwirbelung der Teilabgasströme im Inneren eines solchen Kanals zur Folge haben. Dies führt zu einer intensiven Mischung der Teilabgasströme selbst, so dass ein inniger Kontakt der im Abgas enthaltenen Schadstoffe mit der Kanalwand gewährleistet ist. Weiterhin ist es möglich, durch derartige Sekundärstrukturen Strömungspassagen quer zum Kanal zu bilden, die einen Gasaustausch von Teilabgasströmen in benachbarten Kanälen ermöglichen. Aus diesem Grund sind Sekundärstrukturen bekannt, die beispielsweise Leitflächen, Mikrostrukturen, Noppen, Vorsprünge, Flügel, Laschen, Löcher oder ähnliches umfassen. Insofern ergibt sich eine deutlich erhöhte Variationsvielfalt bei der Herstellung solcher metallischer Wabenkörper gegenüber solchen aus keramischem Material, da hier eine solch komplexe Kanalwand nicht bzw. mit nur besonders hohem technischen Aufwand realisiert werden kann.

Weiter ist es bei der Abgasbehandlung von besonderem Interesse, dass eine Umsetzung der im Abgas enthaltenen Schadstoffe nahezu unverzüglich nach dem Start des Motors erfolgt. Dabei sollte dies gemäß den gesetzlichen Bestimmungen bzw. Richtlinien mit einer besonders hohen Effektivität stattfinden. Aus diesem Grund wurden in der Vergangenheit immer dünner werdende Metallfolien eingesetzt. Sehr dünne Blechfolien haben zur Folge, dass eine sehr geringe oberflächenspezifische Wärmekapazität vorliegt. D. h., dass dem vorbeiströmenden Abgas relativ wenig Wärme entzogen wird bzw. die Blechfolien selbst relativ schnell eine Temperaturerhöhung erfahren. Das ist deshalb wichtig, weil die derzeit im Abgassystem eingesetzten katalytisch aktiven Beschichtungen erst ab einer bestimmten Anspringtemperatur mit der Umsetzung der Schadstoffe beginnt, die in etwa bei Temperaturen von 230° C bis 270° C liegt. Mit dem Ziel, bereits nach wenigen Sekunden die Schadstoffe mit einer mindestens 98 %igen Effektivität umzusetzen, wurden Blechfolien eingesetzt, die eine Foliendicke beispielsweise kleiner 20 µm haben.

Aus den oben genannten Zielsetzungen resultieren jedoch eine Reihe fertigungstechnischer und anwendungstechnischer Probleme. Die Herstellung derartig filigraner Strukturen, insbesondere der Sekundärstrukturen bzw. Mikrostrukturen, erfordert besonders präzise arbeitende Werkzeuge, die üblicherweise sehr teuer sind und demnach lange Standzeiten verwirklichen sollten. Dabei ist zu berücksichtigen, dass einerseits umformende und andererseits ggf. auch trennende Fertigungsschritte bewerkstelligt werden müssen. Um Werkzeugkosten zu sparen, wurden möglichst viele Bearbeitungsschritte in ein Werkzeug integriert, wobei aufgrund der Gestalt der Sekundärstruktur ein zunehmender Verschleiß am Werkzeug festzustellen war. Weiterhin besteht das Problem, dass die relativ dünnen Blechfolien mit einer geeigneten Geschwindigkeit zugeführt werden müssen, nach Möglichkeit ohne einer unerwünschten Kaltverformung ausgesetzt zu werden. Die Kaltverfestigung kann das Umformungsverhalten der Blechfolie negativ beeinflussen.

Aufgrund der geringen Materialdicke besteht zudem die Gefahr, dass die Blechfolie zum Knittern, zum Aufrollen und/oder zum Einreißen neigt. Diese unerwünschten Verformungen können schon bei der Herstellung, als auch beim Transport oder während des Einsatzes in einer Abgasanlage eines Automobils auftreten bzw. sich verstärken. Die Knitter haben beispielsweise zur Folge, dass unter Umständen Kanäle verstopft werden bzw. Risse gebildet sind, die infolge der hohen thermischen und dynamischen Belastungen im Abgassystem eines Automobils sich fortpflanzen und somit die strukturelle Integrität des Wabenkörpers gefährden. Weiterhin ist zu berücksichtigen, dass derartig geknitterte oder deformierte Primär- und/oder Sekundärstrukturen sich in einer unerwünschten Weise dem Abgas entgegenstellen, so dass unter Umständen ein erhöhter Staudruck vor dem Wabenkörper festzustellen ist, was ggf. zur Reduzierung der Motorleistung führen kann.

Hiervon ausgehend ist es Aufgabe der vorliegenden Erfindung, einen Trägerkörper, insbesondere für ein katalytisch aktives Material, anzugeben, welches dauerhaft den hohen thermischen und dynamischen Belastungen im Abgassystem eines Automobils standhalten kann. Insbesondere sollen die eingangs genannten technischen Probleme überwunden werden, indem eine Blechfolie vorgeschlagen wird, die zwar komplex aufgebaut und mit einer großen, relativ steifen Oberfläche versehen aber dennoch dauerhaltbar ist. Insbesondere soll gewährleistet sein, dass die Strukturen der Blechfolie im Inneren des Trägerkörpers möglichst über einen langen Zeitraum im Einsatz beibehalten werden, um auf diese Weise eine besonders effektive Einrichtung zur Reinigung von Abgasen bereitzustellen.

Diese Aufgaben werden gelöst durch eine Blechfolie mit den Merkmalen des Patentanspruchs 1 beziehungsweise einem Trägerkörper umfassend eine solche Blechfolie gemäß den Merkmalen des Patentanspruchs 8, sowie einer Abgasanlage gemäß den Merkmalen des Patentanspruchs 10. Weitere vorteilhafte Ausgestaltungen sind in den jeweils abhängigen Patentansprüchen beschrieben. Dabei sind die dort im einzelnen aufgeführten Merkmale in beliebiger, sinnvoller Weise miteinander kombinierbar.

Die erfindungsgemäße Blechfolie umfasst also mindestens einen Schlitz, der in einen Innenbereich der Blechfolie angeordnet ist, wobei der mindestens eine Schlitz zumindest teilweise eine Mikrostruktur der Blechfolie begrenzt, die aus einer Oberflächenstruktur der Blechfolie herausragt. Die Blechfolie ist dadurch gekennzeichnet, dass der mindestens eine Schlitz in wenigstens einem Randbereich eine Ausnehmung aufweist.

Zunächst sei darauf hingewiesen, dass sich eine Mehrzahl beziehungsweise Vielzahl von Schlitzen in der Blechfolie befinden können, wobei sich zumindest einer in einen Innenbereich der Blechfolie erstreckt. D.h. insbesondere, dass der Schlitz nicht mit dem Rand der Blechfolie in Kontakt ist, also entweder vollständig von dem Material der Blechfolie umrandet ist. Es ist jedoch auch möglich, dass der Schlitz komplexer aufgebaut ist, sich also nicht nur in eine Richtung erstreckt (statt I-förmig z.B. V-, W-, T-, X-förmig oder in einer ähnlichen Weise), dann sind jedoch mindestens 2, bevorzugt alle, Randbereiche des komplexen Schlitzes mit einer Ausnehmung versehen. Ein solcher, insbesondere vollständig im Innenbereich der Blechfolie liegender, Schlitz wird in das Material eingebracht, um einerseits ein Fluidaustausch durch die Blechfolie selbst zu ermöglichen, andererseits dient der Schlitz auch zur Ausbildung von Mikrostrukturen bzw. Sekundarstrukturen, wie sie in der Einleitung beschrieben sind. Unter dem Begriff Mikrostrukturen sind insbesondere auch Ausstülpungen, Umfalzungen, Aufbiegungen oder dergleichen zu verstehen, die in der Regel in bzw. auf der Blechfolie lokal begrenzt sind. Die Mikrostrukturen können beispielsweise auch Noppen, Flügel, Kanten oder ähnliche Strukturen bilden. Die Mikrostruktur dient unter anderem der Beeinflussung einer an der Oberfläche der Blechfolie entlang geführten Fluid-Strömung, so dass Verwirbelungsbeziehungsweise Beruhigungszonen entstehen, in denen einerseits eine Art turbulente Strömung oder eine reduzierte Strömungsgeschwindigkeit bezüglich des Fluides erzeugt wird. Betreffend die Wirkung beziehungsweise Ausgestaltung solcher Mikrostrukturen sei beispielhaft auf die WO 01/80978 A1 verwiesen, deren Inhalt hier vollständig zum Gegenstand der Offenbarung gemacht ist.

Neben dieser Mikrostruktur weist die Blechfolie zudem eine sogenannte Oberflächenstruktur bzw. Primärstruktur auf. Hiermit ist gemeint, dass die Blechfolie selbst nicht eben ist, sondern eine übergeordnete Struktur aufweist. Bekanntermaßen sind Blechfolien, die als Trägerkörper für katalytisch aktives Material im Abgassystem von Automobilen eingesetzt werden, mit einer Oberflächenstruktur versehen, die eine Vielzahl von Kanälen bildet, wenn diese Blechfolie mit anderen Blechfolien zu einem Trägerkörper zusammengesetzt ist. Üblicherweise sind diese Oberflächenstrukturen wellenartig oder auch zick-zackförmig ausgeführt. Bei den Wellenformen haben sich beispielsweise eine Art sinus-förmige Wellung oder eine omega-förmige Wellung besonders bewährt. Diese Oberflächenstrukturen erstrecken sich in der Regel über die gesamte Länge der Blechfolie bzw. des resultierenden Trägerkörpers wobei unter Umständen auch kontinuierliche oder sprunghafte Änderungen in der Höhe beziehungsweise der Weite der Oberflächenstruktur über die Längen bekannt sind. Zusammenfassend ist also hier davon auszugehen, dass die Oberflächenstruktur dazu dient, für ein Fluid durchströmbare Kanäle in einer axialen Richtung des Trägerkörpers zu bilden, während die Mikrostruktur vordergründig eine Beeinflussung der Strömung im Inneren dieser durch die Oberflächenstruktur gebildeten Kanäle bewirken soll. Somit ist davon auszugehen, dass die Mikrostrukturen so ausgebildet sind, dass sie sich in den Innenbereich eines solchen Kanals hinein erstrecken und selbstredend nicht größer bzw. höher ausgeführt sind, als dies der Kanal zulässt. Je nach Form des Kanals kann sich die Mikrostruktur von einer beliebigen Stelle aus in den inneren Bereich hinein erstrecken, also sowohl von einer Grundfläche sowie von den Seitenflächen oder auch von einem Deckbereich.

Erfindungsgemäß wird vorgeschlagen, dass der Schlitz in wenigstens einem Randbereich eine Ausnehmung aufweist. Bevorzugt haben alle Randbereiche des Schlitzes eine Ausnehmung, insbesondere auch die gleiche Gestalt der Ausnehmung. Üblicherweise weist der Schlitz eine linienartige (I-förmige) Gestalt auf. Das bedeutet, dass üblicherweise die Randbereiche spitz bzw. mit einem extrem kleinen Radius (z.B. kleiner 0,05mm) auslaufen. Ein solcher Schlitz wird üblicherweise durch das Fertigungsverfahren Stanzen hergestellt und weist einen geraden (I-förmigen) Verlauf auf.

Zur Herstellung der Mikrostrukturen wird der Bereich der Blechfolie, welcher sich direkt in Nachbarschaft des Schlitzes befindet, mittels geeignete Werkzeuge aufgebogen, so dass beispielsweise Leitflächen entstehen. Durch diesen Biegevorgang, wird das Material in dem Randbereich um den Schlitz stark beansprucht; so können beispielsweise Kaltverfestigungs-Vorgänge zu einem veränderten thermischen und dynamischen Verhalten der Blechfolie um den Schlitz herum führen. Die zum Teil erheblichen Belastungen, die auf eine solche Leitfläche bzw. die Blechfolie im Einsatz im Abgassystem eines Automobils einwirken, können eine starke Kerbenbildung im Randbereich des Schlitzes zur Folge haben. Ein Riss, der sich ausgehend von diesem Randbereich des Schlitzes weiter in das Material der Blechfolie fortpflanzen würde, gefährdet die gesamte Funktionalität des Trägerkörpers, können doch abgelöste Teile aufgrund des hindurchströmenden Abgasstromes erheblich beschleunigt werden und auf nachgeordnete Komponenten zur Abgasreinigung auftreffen. Auch dort würden sie die Kanäle verstopfen, Poren zusetzen, Material abtragen, Beschichtungen zerstören oder dergleichen.

Solche Effekte werden sicher durch die Vorsehung von Ausnehmungen in wenigstens einem Randbereich des Schlitzes vermieden. Diese Ausnehmungen weisen einen relativ großen Radius auf, so dass eine Kerbwirkung auch bei zum Teil erheblich verformten Bereichen der Blechfolie nicht auftritt. Bevorzugt weist der Schlitz an jedem seiner Randbereiche eine solche Aufnehmung auf. Dabei ist auch vorstellbar, dass beispielsweise gekreuzte Schlitze vorgesehen sind, wobei an den jeweiligen Endbereichen eine solche Ausnehmung vorgesehen ist. Die Ausnehmung bedeutet mit anderen Worten eine Aufweitung des linienförmigen Schlitzes, so dass in den Endbereichen ein breiterer Schlitz vorgesehen ist. Hierfür bieten sich runde Querschnitte, breitere Nuten mit abgerundeten Endflanken, Freistiche oder ähnliche Formen an. Weiter kann die Ausnehmung auch in Form eines oder mehrerer abgeknickter bzw. abgewinkelter Endbereiches des Schlitzes ausgeführt sein. Dabei ist auch möglich, dass die Randbereiche mit unterschiedlichen Formen betreffend die Ausnehmung ausgestaltet sind. Die Herstellung solcher Schlitze mit Ausnehmungen kann einfach durch trennende Fertigungsverfahren durchgeführt werden, wie beispielsweise dem (Laserstrahl-) Schneiden, dem Stanzen, dem Drücken oder ähnliche Verfahren zur Blechtrennung.

Weiter wird vorgeschlagen, dass die Oberflächenstruktur der Blechfolie eine wellenähnliche Gestalt mit sich in einer Längsrichtung erstreckenden Wellenbergen und Wellentälern hat. Eine wellenähnliche Gestalt umfasst insbesondere auch eine Sinus-Form, die sich erkennen lässt, wenn die Blechfolie von einer Kante betrachtet wird. Die Wellenberge beziehungsweise Wellentäler erstrecken sich bevorzugt über die gesamt axiale Länge der Blechfolie, wobei sie vorzugsweise im wesentlichen parallel zueinander verlaufen.

Dabei ist es besonders vorteilhaft, dass die wellenähnliche Gestalt durch eine Welllänge und eine Wellhöhe beschrieben werden kann, wobei das Verhältnis von Welllänge zu Wellhöhe im Bereich von 3,0 bis 1,0 liegt, insbesondere im Bereich von 2,5 bis 1,1 oder bevorzugt im Bereich von 2,0 bis 1,3. Mit Wellenberg bzw. Wellental ist in der Regel der höchste bzw. der tiefste Punkt der wellenähnlichen Gestalt gemeint. Die Welllänge bezeichnet dabei den Abstand zweier direkt benachbarter, gleichartiger Extrema der Oberflächenstruktur, wie beispielsweise zwischen zwei direkt benachbarten Wellenbergen oder zwischen zwei direkt benachbarten Wellentälern. Die Wellhöhe beschreibt den Höhenunterschied zweier unterschiedlicher Extrema, also beispielsweise den Höhenunterschied von Wellenberg zu Wellental. In der Regel werden Wellhöhe und Welllänge senkrecht zueinander vermessen. Dabei sei darauf hingewiesen, dass grundsätzlich Abweichungen hinsichtlich der Wellhöhe oder der Welllänge auftreten, die aus fertigungstechnischer Sicht nicht zu vermeiden sind. Die hier angegebenen Kennwerte stellen somit einen statistischen Mittelwert dar, wobei fertigungstechnische Toleranzen immer zu bedenken sind.

Das hier angegebene Verhältnis von Welllänge zu Wellhöhe beschreibt auch den Grad der Verformung der Blechfolie. Geht man davon aus, dass die Blechfolie zunächst im wesentlichen eben vorliegt, und anschließend, beispielsweise durch ein Wellwalzverfahren, die Oberflächenstruktur eingebracht wird, so bedeutet ein kleines Verhältnis von Welllänge zu Wellhöhe, beispielsweise kleiner 2,0, dass die Wellenberge beziehungsweise die Wellentäler relativ dicht nebeneinander angeordnet sind, während der Höhenunterschied von Wellenberg zu Wellental relativ groß ausgeführt ist. Dadurch werden relativ schlanke Kanäle gebildet, die recht steil verlaufende Flanken aufweisen. Gerade bei so stark verformten Blechfolien besteht die Gefahr der Materialermüdung bereits beim Herstellen, so dass beispielsweise bei einer zunehmenden Abnutzung des Werkzeuges schon Risse entstehen können, die sich später ausbreiten können. Deshalb ist gerade für solche Blechfolien die Vorsehung von Ausnehmungen in den Randbereichen der Schlitze von besonderem Interesse.

Gemäß einer weiteren Ausgestaltung wird vorgeschlagen, dass die Mikrostruktur eine Leitfläche umfasst, die aus der Oberflächenstruktur der Blechfolie herausgestellt ist, insbesondere in Längsrichtung schräg, wobei bevorzugt ein Winkel gebildet ist, der im Bereich von 10° bis 35° liegt. Eine solche Leitfläche ist besonders geeignet, um Teilströmungen an der Oberfläche der Blechfolie abzuschälen und hin zu gewünschten Bereichen zu lenken. Eine solche Leitfläche ist im Detail auch der deutschen Gebrauchsmusterschrift DE 201 17 873 U1 zu entnehmen, wobei hiermit auf dessen Offenbarungsinhalt voll Bezug genommen wird.

Gemäß einer weiteren Ausgestaltung weist die Blechfolie zwei Schlitze auf, die jeweils eine Mikrostruktur zumindest teilweise begrenzen. Das bedeutet mit anderen Worten, dass zumindest eine der Mikrostrukturen in zwei Richtungen durch ein Paar Schlitze begrenzt wird, wobei der dazwischenliegende Bereich der Blechfolie gegenüber der allgemeinen Oberflächenstruktur herausgestellt, herausgedrückt oder in einer sonstigen Art und Weise verformt ist. Dabei werden in der Regel Flächen gebildet, die beispielsweise nicht so schräg zur Strömungsrichtung des Abgases ausgerichtet sind, so dass hier eine geringere Umleitung des Gasstromes bewirkt wird. Dies kann einen vorteilhaften Effekt auf den erzeugten Druckverlust zur Folge haben, weil solche Mikrostrukturen einen geringeren Strömungswiderstand darstellen.

Gemäß einer weiteren Ausgestaltung der Blechfolie hat die mindestens eine Ausnehmung eine abgerundete Form insbesondere einen Kreisbogen mit einem Krümmungsradius, wobei der Krümmungsradius bevorzugt mindestens 0,1 mm beträgt. Versuche haben gezeigt, dass mit einem Krümmungsradius größer 0,1 mm, insbesondere größer oder gleich 0,2 mm, die Rissbildung beziehungsweise Rissausbreitung ausgehend von den Schlitzen deutlich reduziert wird. Ursache hierfür ist unter anderem eine deutlich reduzierte Materialspannung der Blechfolie während des Einsatzes, die zum Teil nur noch im Bereich von kleiner 30 % gegenüber dem einfachen Schlitz liegt. Eine reduzierte Spannung in den Randbereichen der Schlitze vermeidet die Rissausbildung.

Nach einer weiteren Ausgestaltung der Blechfolie ist eine Vielzahl von Mikrostrukturen vorgesehen, die in Linien parallel zur Längsrichtung der Blechfolie und/oder Reihen quer zu Längsrichtung angeordnet sind. Bevorzugt sind die Mikrostrukturen so angeordnet, dass sie sich auf den Wellenbergen beziehungsweise in den Wellentälern befinden, wobei sich die auf den Wellenbergen angeordneten Mikrostrukturen hin zu den Wellentälern und die auf den Wellentälern angeordneten Mikrostrukturen hin zu den Wellenbergen erstrecken. Das heißt mit anderen Worten, dass die Mikrostrukturen innerhalb zweier Ebenen angeordnet sind, welche jeweils durch entweder die Wellenberge oder die Wellentäler definiert sind, wenn eine solche Blechfolie flach auf eine ebene Unterlage positioniert wird. Somit sind die Mikrostrukturen später im Inneren der Strömungskanäle bei einem Trägerkörper angeordnet. Im Hinblick auf die Anordnung zueinander sei noch darauf hingewiesen, dass gegebenenfalls auch ein Versatz der Linien beziehungsweise Reihen über die Länge beziehungsweise Breite der Blechfolie möglich ist.

Weiter wird vorgeschlagen, dass die Blechfolie aus einem Aluminium und Chrom enthaltenden, thermisch hoch belastbarem und korrosionsbeständigem Stahl gebildet ist, wobei die Blechfolie bevorzugt eine Blechfoliendicke im Bereich von 0,015 bis 0,15 mm aufweist, insbesondere im Bereich von 0,03 bis 0,08 mm. Alternativ dazu ist es grundsätzlich auch möglich, eine Blechfolie zu verwenden, die eine Nickel-Basis bzw. Legierungen davon aufweist. Die hier angegebenen Materialien haben sich gerade für den Einsatz unter den aggressiven Bedingungen im Abgassystem eines Automobils bewährt. Die Blechfoliendicke ist dabei in Abhängigkeit vom Einsatzort beziehungsweise dem Einsatzzweck der Blechfolie im Abgassystem zu wählen. Grundsätzlich ist anzumerken, dass eine höhere Blechfoliendicke eine erhöhte Wärmekapazität darstellt, so dass solche Blechfolien beispielsweise auch als Wärmespeicher eingesetzt werden können. Darüber hinaus hat die erhöhte Foliendicke natürlich auch eine erhöhte Stabilität zur Folge, so dass diese Blechfolien besonders hohen dynamischen Belastungen ausgesetzt werden können. Die relativ dünnen Blechfolien im Bereich von 0,015 bis ca. 0,05 mm haben nur eine relativ geringe Wärmekapazität, so dass sich diese Folien beispielsweise schnell der Umgebungstemperatur anpassen. Das bedeutet, dass diese nach dem Kaltstart der Verbrennungskraftmaschine schnell durch das vorbeiströmende Abgas erwärmt werden und somit schnell eine Aktivierung des auf ihnen haftenden Katalysators ermöglichen.

Gemäß einer weiteren Ausgestaltung hat die Mikrostruktur eine maximale Erstreckung aus der Oberflächenstruktur heraus, der im Bereich von 0,3 bis 0,95 (30% - 95%) der Wellhöhe liegt, bevorzugst im Bereich von 0,5 bis 0,8 (50% - 80%) der Wellhöhe. D.h. mit anderen Worten, dass sich die Mikrostruktur deutlich erkennbar von der Oberflächenstruktur der Blechfolie abhebt. Nur so kann die, üblicherweise laminar, an der Blechfolie vorbeiströmende Abgasmenge in eine turbulente Strömung umgewandelt werden.

Gemäß einem weiteren Aspekt der Erfindung wird ein Trägerkörper für eine Komponente zum Reinigen von Abgas umfassend eine Mehrzahl von zumindest teilweise strukturierten Blechfolien vorgeschlagen, wobei diese Blechfolien so gestapelt und/oder gewunden sind, dass der Trägerkörper für ein Fluid durchströmbar ist, wobei zumindest eine der Mehrzahl von Blechfolien eine Blechfolie ist, wie sie zuvor beschrieben wurde.

In diesem Zusammenhang wird auch vorgeschlagen, dass der Trägerkörper eine Vielzahl von sich im wesentlichen in einer Längsrichtung erstreckende Kanälen aufweist, die durch die Oberflächenstruktur der Blechfolie zumindest teilweise gebildet sind, wobei die wenigstens eine Mikrostruktur bevorzugt Mittel zur Strömungsbeeinflussung des Fluids sind, so dass das Fluid beim Durchströmen des Trägerkörpers hin zu benachbarten Kanälen gelenkt wird. Mit anderen Worten erfolgt somit eine Strömungsbeeinflussung in eine Richtung, die zumindest teilweise schräg oder senkrecht zur Längsrichtung der Kanäle beziehungsweise der Hauptströmungsrichtung des Abgases ist. Die Mikrostruktur kann dabei auch mehrere Mittel zur Strömungsbeeinflussung aufweisen. So ist es möglich, dass die Mikrostruktur durch eine Leitfläche gebildet wird, die beispielsweise durch Noppen, Öffnungen, Absätze, Umstülpungen oder dergleichen eine definierte Ablenkung des Abgases bewirkt.

Weiter wird vorgeschlagen, dass der Trägerkörper eine Kanaldichte im Bereich von 100 bis 1000 cpsi ("cells per square inch"; 6,45 Kanäle pro Quadratinch entspricht 1 Kanal pro Quadratzentimeter) hat, bevorzugt im Bereich von 300 bis 600 cpsi. Dabei weisen die Blechfolien bevorzugt ein Verhältnis von Welllänge zu Wellhöhe auf, das im Bereich von 2,0 bis 1,3 liegt.

Gemäß noch einer weiteren Ausgestaltung des Trägerkörpers weist dieser zumindest in einem Teilbereich (in Längsrichtung) über einen Querschnitt senkrecht zur Längsrichtung eine gleichmäßige Verteilung von Mikrostrukturen auf. In Längsrichtung des Trägerkörpers, die im wesentlichen mit der Hauptströmungsrichtung des Abgases durch den Trägerkörper hindurch übereinstimmt, ist die Vielzahl von Kanälen bevorzugt ausgerichtet. Betrachtet man nun einen Querschnitt senkrecht dazu, so sind die Kanäle als eine Art Wabenstruktur erkennbar. Im Hinblick auf einen solchen Querschnitt wird nun vorgeschlagen, dass eine gleichmäßige Verteilung von Mikrostrukturen (im statistischen Sinn) vorliegt. Das bedeutet mit anderen Worten, dass im wesentlichen der gleiche Abstand hin zu benachbarten Mikrostrukturen gegeben ist und/oder dass jeweils nur eine bestimmte Anzahl von Kanälen pro Einheitsquerschnittsfläche angeordnet sind. Dies hat eine besonders symmetrische Belastung der Blechfolie bzw. des Trägerkörpers zur Folge, so dass hier Spannungsspitzen reduziert werden können.

Weiter wird vorgeschlagen, dass eine Vielzahl von Mikrostrukturen in einem Querschnitt senkrecht zur Längsrichtung des Trägerkörpers angeordnet sind, wobei diese so gestaltet sind, dass das durchströmende Fluid teilweise in unterschiedliche Richtungen abgelenkt wird. Hiermit ist insbesondere gemeint, dass in einem Teilbereich des Querschnitts durch die Mikrostrukturen eine Ablenkung radial auswärts erfolgen kann, während in einem benachbarten Teilbereich des Querschnitts eine Umlenkung des Fluids bzw. Abgases in eine entgegengesetzte, schräg dazu verlaufende, oder windschiefe Richtung erfolgen kann.

Die Ausrichtung der Mikrostrukturen bzw. die daraus resultierende Ablenkung des den Trägerkörper durchströmenden Fluids ist auch wesentlich durch die Anordnung der Blechfolie im Trägerkörper selbst mitbestimmt. So werden bei spiralförmig aufgewickelten Blechfolien in der Regel nur Ablenkungen in radialer Richtung stattfinden, während bei gestapelten oder einfach gebogenen, evolventenförmigen, s-förmigen oder ähnlichen Anordnungen der Blechfolien unterschiedliche Ausrichtungen der Mikrostrukturen in benachbarten Bereichen möglich ist. Hiermit ergibt sich ein deutlich komplexeres Strömungsmischungsbild.

Weiterhin wird darauf hingewiesen, dass der Trägerkörper zusätzlich zu der wenigstens einen Blechfolie zumindest ein Element aus der folgenden Gruppe von Elementen umfasst:
- wenigstens eine glatte Blechlage, die insbesondere im wesentlichen an den Extrema der Oberflächenstruktur der Blechfolie anliegt, bevorzugt mit dieser verbunden ist;
- wenigstens eine poröse Faserlage, die insbesondere im wesentlichen an den Extrema der Oberflächenstruktur der Blechfolie anliegt, bevorzugt mit dieser verbunden ist;
- wenigstens ein Gehäuse, welches den Trägerkörper zumindest in einem Abschnitt umgibt;
- wenigstens eine Manschette, die den Trägerkörper zumindest in einem Anbindungsbereich umgibt und zur Anbindung an ein Gehäuse dient;
- wenigstens eine Beschichtung, die in zumindest einem Sektor des Trägerkörper vorgesehen ist;
- wenigstens eine Messvorrichtung.

Im Hinblick auf die glatte Blechlage ist zu erwähnen, dass bekanntermaßen glatte Blechlagen und strukturierte Blechfolien miteinander abwechselnd gestapelt werden und so jeweils Kanäle begrenzen. Ein solcher Stapel von glatten Blechlagen und strukturierten Blechfolien wird anschließend derart gewunden beziehungsweise gebogen, dass diese den Querschnitt der gewünschten Trägerkörperform aufweisen. Als Trägerkörperformen sind runde, ovale, mehreckige sowie zylindrische, konusartige oder rechteckige Gestalten bekannt.

Die Vorsehung einer porösen Faserlage bietet sich insbesondere dann an, wenn ein solcher Trägerkörper als Filter für Partikel oder andere feste, flüssige bzw. gasförmige Bestandteile im Abgasstrom eingesetzt wird. Auch an dieser Stelle sei auf das deutsche Gebrauchsmuster DE 201 17 873 U1 verwiesen, deren Offenbarungsinhalt auch in Bezug auf die poröse Faserlage hier zum Vortrag gemacht wird.

Als Verbindungstechnik der glatten Blechlage beziehungsweise der porösen Faserlage mit der Blechfolie kommen generell alle bekannten fügetechnischen Fertigungsverfahren in Betracht, bevorzugt wird hier aber das Schweißen beziehungsweise Löten vorgeschlagen.

Eine Manschette beschreibt eine zusätzliche Folie, die den Trägerkörper beziehungsweise den Stapel der Blechfolien am Umfang umgibt und zur Anbindung an ein Gehäuse dient. Somit wird eine direkte fügetechnische Verbindung von den die Kanäle bildenden Blechlagen beziehungsweise Blechfolien hin zum Gehäuse unterbunden. Zur Erläuterung der Funktion der Manschette sei beispielhaft auf die WO 01/79670 A1 verwiesen, deren Offenbarungsinhalt hiermit voll umfasst ist.

Die Beschichtung ist jeweils in Abhängigkeit der Funktion des Trägerkörpers zu wählen. So sind Beschichtungen bekannt, die eine katalytische Umsetzung von im Abgas enthaltenen Schadstoffen bewirken, die im wesentlichen durch Edelmetalle oder seltene Erden gebildet sind. Darüber hinaus sind Beschichtungen üblich, die eine Art Speicherfunktion übernehmen, insbesondere im Hinblick auf Stickoxide. Es ist auch möglich, dass die Beschichtung für eine weitere Vergrößerung der Oberfläche der Blechfolie eingesetzt wird, wobei üblicherweise Washcoat zum Einsatz gelangt. Mit dem Hinweis darauf, dass eine solche Beschichtung zumindest in einem Sektor des Trägerkörpers vorgesehen ist, ist insbesondere gemeint, dass der Trägerkörper:
- mit unterschiedlichen Beschichtungen ausgeführt ist (z. B. bezüglich Art, Schichtdicke, Oberflächenrauigkeit, etc.) und/oder
- auch nur teilweise mit einer Beschichtung versehen ist, wobei sich dieser Sektor sowohl dem inneren Bereich des Trägerkörpers ohne Kontakt zur Umfangsfläche befinden kann, als auch (zusätzlich oder ersatzweise) nur über einen Teil der axialen Länge erstrecken kann.

Die Vorsehung einer Messvorrichtung, insbesondere von Sensoren oder dergleichen, dient beispielsweise der Überprüfung der Funktionalität des Trägerkörpers. Als Sensoren sind unter anderem sogenannte Lambdasonden oder auch Temperaturfühler vielfach im Einsatz, wobei der im Abgas befindliche beziehungsweise im Trägerkörper vorliegende Messwert üblicherweise durch das Gehäuse hin zu einer Motorsteuerung oder einer anderen Steuerungs- oder Regeleinheit weitergeleitet wird.

Schließlich wird noch eine Verwendung des beschriebenen Trägerkörpers in einer Abgasanlage als eine Komponente aus der Gruppe der folgenden Komponenten zur Reinigung von Abgasen vorgeschlagen:
- katalytischer Konverter,
- Strömungsmischer,
- Adsorber,
- Partikelfalle.

Die verschiedenen Anwendungsbereiche beziehungsweise Ausgestaltungen für katalytische Konverter, Strömungsmischer, Adsorber oder Partikelfallen sind dem Fachmann auf diesem Gebiet bekannt, so dass es für ihn in der Regel einfach möglich ist, die hier beschriebenen Trägerkörper an die jeweiligen Aufgaben als Komponenten im Abgassystem anzupassen. Da die thermischen und dynamischen Belastungen für den Trägerkörper stets hoch sind, und die Rissausbreitung bei den Schlitzen für die Mikrostruktur hier deutlich reduziert werden kann, werden alle die zuvor genannten Komponenten eine deutlich verlängerte Lebensdauer aufweisen. Somit können die gesetzlich geforderten Grenzwerte hinsichtlich der Abgasreinigung ohne hohe Wartungs- beziehungsweise Instandsetzungskosten über eine lange Zeit aufrechterhalten werden.

Die Erfindung wird nachfolgend anhand der Figuren näher erläutert. Dabei sei darauf hingewiesen, dass die Figuren unter anderem besonders bevorzugte, vorteilhafte Ausführungsbeispiele zeigen, die jedoch die Erfindung nicht begrenzen.

Es zeigen:
- Fig. 1: schematisch und perspektivisch eine Detailansicht einer Blechfolie mit einer Mikrostruktur;
- Fig. 2.1: eine Mikrostruktur mit einem Schlitz ohne Ausnehmung;
- Fig. 2.2: eine Mikrostruktur mit einem Schlitz, der ein erstes Ausführungsbeispiel einer Ausnehmung aufweist;
- Fig. 2.3: eine Mikrostruktur 4 mit einem Schlitz, der eine weiteres Ausführungsbeispiel einer Ausnehmung aufweist;
- Fig. 3: schematisch den Aufbau eines Trägerkörpers mit einer ersten Ausgestaltung der Blechfolien;
- Fig.4: eine Detailansicht eines Trägerkörpers umfassend Blechfolien mit Mikrostrukturen sowie eine Faserlage;
- Fig. 5: schematisch den Aufbau eines Trägerkörpers in einem Längsschnitt;
- Fig. 6: schematisch den Aufbau einer weiteren Ausgestaltung des Trägerkörpers im Querschnitt;
- Fig. 7: schematisch und perspektivisch den Aufbau einer Abgasanlage;
- Fig. 8: schematisch die Herstellung einer Ausführungsform der erfindungsgemäßen Blechfolie; und
- Fig. 9: schematisch und perspektivisch eine Detailansicht einer Blechfolie mit einer einen Drall bewirkenden Mikrostruktur.

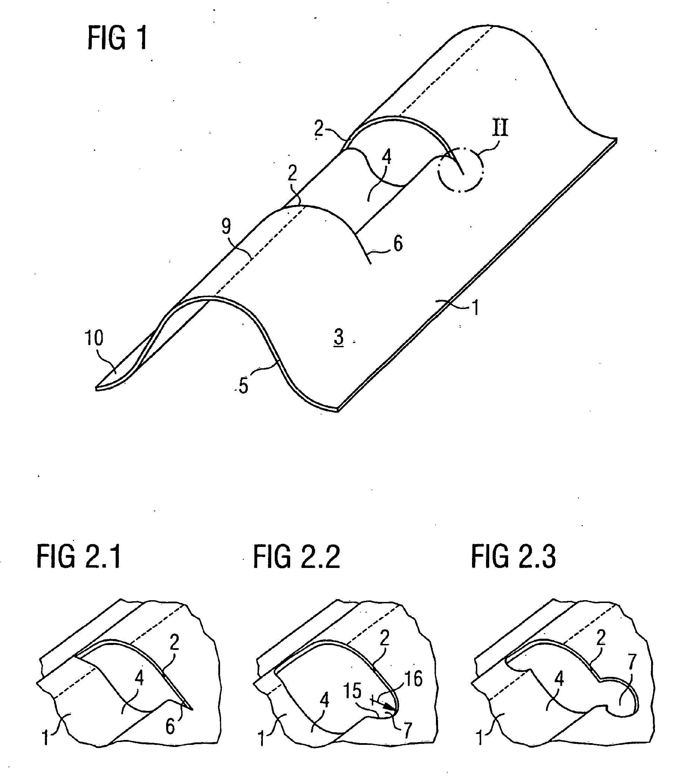

Figur 1 zeigt schematisch und perspektivisch einen Teil einer Blechfolie 1 mit einer Mikrostruktur 4. Die Blechfolie 1 umfasst in diesem dargestellten Teilausschnitt eine Mikrostruktur 4, die von zwei Schlitzen 2 teilweise begrenzt ist, wobei sich diese Schlitze 2 nur in einen Innenbereich 3 der Blechfolie 1 erstrecken. Die Mikrostruktur 4 ragt aus der Oberflächenstruktur 5 der Blechfolie 1 heraus. Die Oberflächenstruktur 5 ist mit Wellenbergen 9 und Wellentälern 10 ausgeführt. Die Randbereiche 6 der Schlitze 2 sind, wie angedeutet, vergrößert in den nachfolgenden Figuren 2.1, 2.2 und 2.3 dargestellt.

Figuren 2.1, 2.2. und 2.3 zeigen Detailansichten einer Mikrostruktur 4, die durch einen Schlitz 2 begrenzt ist. Der Schlitz 2 ermöglicht es, dass die Mikrostruktur 4 so aus der Blechfolie 1 geformt ist, dass diese aus der Oberflächenstruktur 5 heraustritt. In Figur 2.1 ist dabei der Randbereich 6 als einfacher Schlitz 2 dargestellt, also ohne die erfindungsgemäße Ausnehmung 7. Die Spitzenübergänge im Randbereich 6 stellen eine Kerbe dar, so dass bei einer Relativbewegung der Mikrostruktur 4 gegenüber der Blechfolie 1 im Randbereich 6 eine sich fortsetzende Aufweitung des Schlitzes 2 erfolgen kann. Damit können letztendlich ganze Mikrostrukturen 4 aus der Blechfolie 1 herausgelöst werden. Um so etwas zu vermeiden, sind, wie beispielhaft in den Figuren 2.2 und 2.3 dargestellt, im Randbereich 6 des Schlitzes 2 Ausnehmungen 7 vorgesehen. Die Ausnehmung 7 in Figur 2.2 bildet einen Kreisbogen 15 mit einem Krümmungsradius 16, der bevorzugt im Bereich von 0,2 mm bis 0,4 mm liegt. In Figur 2.3 ist die Ausnehmung 7 als Freistich dargestellt. Andere, die Kerbwirkung reduzierende Formen der Ausnehmung 7 können ebenfalls zum Einsatz gelangen.

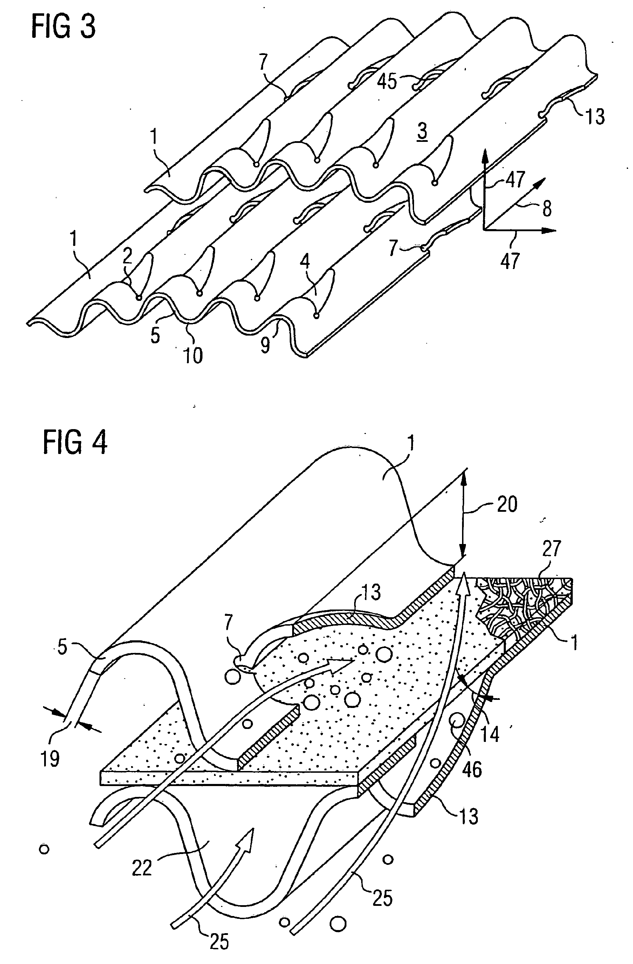

Figur 3 zeigt schematisch und perspektivisch die Anordnung zweier Blechfolien 1 mit Mikrostrukturen 4, welche zu einem erfindungsgemäßen Trägerkörper zusammengesetzt werden können. Die Blechfolien 1 weisen wiederum die Oberflächenstruktur 5 mit Wellenbergen 9 und Wellentälern 10 auf, welche sich bevorzugt auf die gesamte Länge in Längsrichtung 8 erstrecken. Die Mikrostrukturen 4 der Blechfolie 1 sind "wechselseitig" und "gleichgerichtet" angeordnet. "Wechselseitig" bedeutet in diesem Zusammenhang, dass sich die Mikrostruktur 4 in Längsrichtung 3 gesehen abwechselnd nach oben und nach unten (bezogen auf die Oberflächenstruktur 5 der Blechfolie 1) erstrecken. "Gleichgerichtet" bedeutet in diesem Zusammenhang, dass die Schlitze 2, die die Mikrostruktur 4 begrenzen, in eine (gemeinsame) Richtung weisen, also der Mikrostruktur 4 vorgelagert sind bzw. diese stromaufwärts begrenzen. Die Mikrostrukturen 4 sind als Leitflächen 13 mit einer Öffnung 45 gebildet. Die Leitflächen 13 bewirken, dass die im wesentlichen in Längsrichtung 8 verlaufende Strömung in Querrichtung 47 abgelenkt wird. In den Randbereichen 6 der Schlitze 2 ist auch deutlich die Ausnehmung 7 vergrößert dargestellt.

Figur 4 zeigt ein Detail einer Ausführungsform des Trägerkörpers 21 als Filterkörper bzw. Partikelfalle perspektivisch und im Schnitt. Es sind zwei zueinander benachbart angeordnete Blechfolien 1 dargestellt, zwischen denen eine Faserlage 27 angeordnet ist. Zur Umlenkung der Strömungsrichtung, die hier durch den Pfeil 25 dargestellt ist, weisen die Blechfolien 1 eine Vielzahl von Leitflächen 13 auf. Dadurch wird sichergestellt, dass das Abgas mit den darin enthaltenen Partikeln 46 die Filterlage 27 durchdringt, so dass die Partikel 46 auf der Oberfläche oder im Inneren der Faserlage 27 so lange festgehalten werden, bis diese in gasförmige Komponenten umgesetzt werden können. Hierzu kann eine diskontinuierliche Regeneration erfolgen (erhebliche Wärmezufuhr) oder eine kontinuierliche Regenerierung nach dem CRT-Verfahren stattfinden, wobei die Verweilzeit der Partikel in dem Filterkörper vorteilhafterweise so verlängert wird, dass die benötigten Reaktionspartner zur chemischen Umsetzung vorliegen.

Die Mikrostrukturen 4 beziehungsweise Leitflächen 13 sind aus der Oberfläche 5 der Blechfolie 1 herausgestellt. Es ist eine in Längsrichtung 8 schräge Anordnung dargestellt ist, wobei ein Winkel 14 gebildet ist, der im Bereich von 10° bis 35° liegt. Die Leitfläche 13 beziehungsweise Mikrostruktur 4 hat eine maximale Erstreckung 20 aus der Oberflächenstruktur 5 heraus, die im Bereich von 0,3 bis 0,95 der Wellhöhe 12 (nicht dargestellt) liegt. Im Randbereich 6 der Schlitze 2 ist wiederum eine Ausnehmung 7 vorgesehen. Die Blechfolien 1 weisen eine Oberflächenstruktur 5 auf, die für ein Fluid in Strömungsrichtung (Pfeil 25) durchströmbare Kanäle 22 bildet.

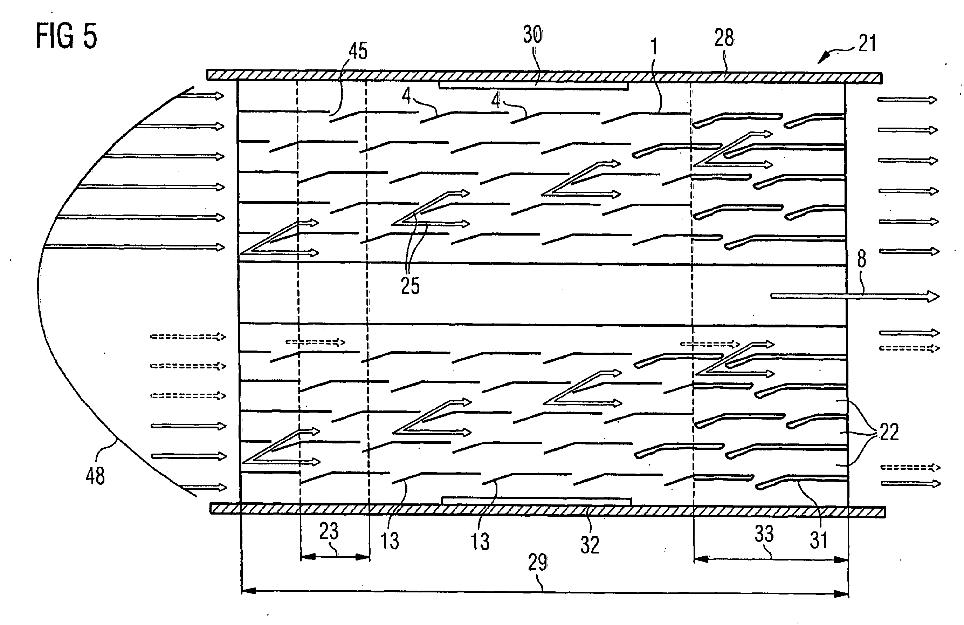

Figur 5 zeigt schematisch in einem Längsschnitt einen Trägerkörper 21, der eine Mehrzahl von Blechfolien 1 aufweist, die für das Abgas in Strömungsrichtung (Pfeil 25) durchströmbare Kanäle 22 bilden. Der hier dargestellte Trägerkörper 21 ist als Strömungsmischer ausgebildet, der die Funktion hat, das Strömungsprofil 48 des ankommenden Abgasstroms, welches im wesentlichen parabelförmig ist, zu vergleichmäßigen. Der Trägerkörper 21 weist eine Vielzahl von Blechfolien 1 mit Mikrostrukturen 4 auf, die Öffnungen 45 bilden, so dass das Abgas in benachbarte Kanäle 22 strömen kann. Dabei ist die Anordnung der Mikrostrukturen 4 im Trägerkörper 21 so gewählt, dass in einem Teilbereich 23 in Längsrichtung 8 über einen Querschnitt 24 (nicht dargestellt) senkrecht zur Längsrichtung 8 eine gleichmäßige Verteilung von Mikrostrukturen 4 vorgesehen ist. Die Blechfolien 1 bzw. der Trägerkörper 21 ist in einem Abschnitt 29 von einem Gehäuse 28 umgeben, wobei hier der Abschnitt 29 die gesamte axiale Länge des Trägerkörpers 21 umfasst, das Gehäuse 28 sogar noch über die axiale Länge des Trägerkörpers 21 hinaus sich erstreckt. Die Anbindung der Blechfolien 1 an das Gehäuse 28 erfolgt mittels einer Manschette 30, die in einem Anbindungsbereich 32 relativ mittig angeordnet ist.

Der dargestellte Trägerkörper 21 beziehungsweise Strömungsmischer weist weiter einen Sektor 33 auf, in dem eine Beschichtung 31 vorgesehen ist. Der Sektor 33 kann sich aber genau wie der Abschnitt 29 über die gesamte axiale Länge des Trägerkörpers 21 erstrecken.

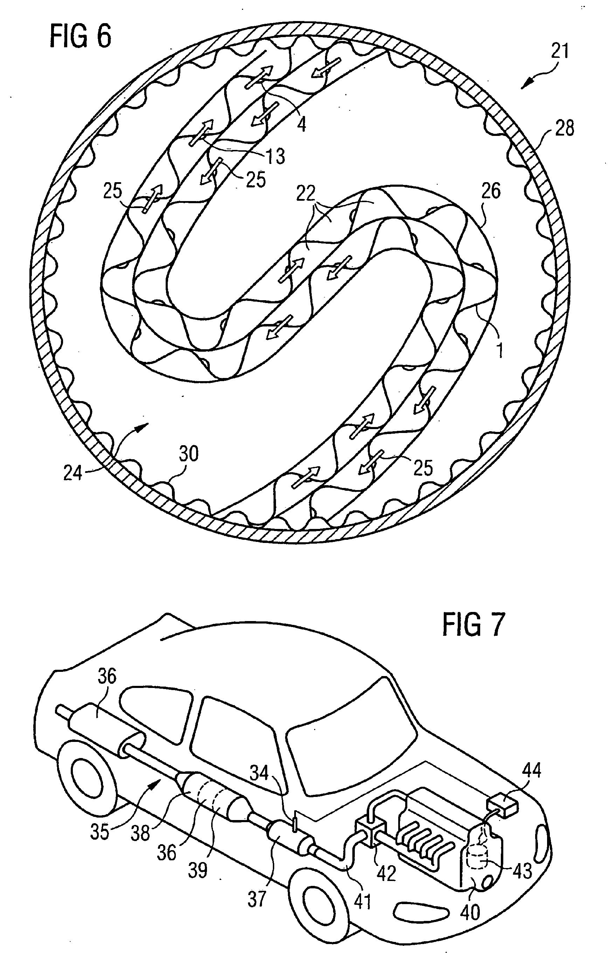

Figur 6 zeigt schematisch und in einem Querschnitt eine weitere Ausgestaltung eines Trägerkörpers 21 mit einem Gehäuse 28. Die Blechfolien 1 sind hierbei S-förmig gewunden, wobei Lagen aus den strukturierten Blechfolien 1 und einer glatten Blechlage 26 gebildet sind. Die Oberflächenstruktur 5 der Blechfolie 1 und die glatten Blechlagen 26 bilden zusammen Kanäle 22, in die die Mikrostrukturen 4 bzw. Leitflächen 13 hineinragen. Die Mikrostrukturen 4 bzw. Leitflächen 13 bewirken eine Umlenkung des den Trägerkörper 21 durchströmenden Fluids, so dass quer dazu, insbesondere innerhalb des Querschnitts 24, Querströmungen entstehen, die hier mit dem Pfeil 25 gekennzeichnet sind. Die Enden der Blechlagen 26 bzw. Blechfolien 1 sind (bevorzugt alle) mit einer Manschette 30 verbunden, die ebenfalls eine Oberflächenstruktur 5 aufweist. Die Manschette 30 ist über den gesamten Umfang der äußeren Kontur des Trägerkörpers 21 angeordnet. Durch eine partielle Anbindung der Manschette 30 mit dem Gehäuse 28 einerseits und einer, ggf. (axial und/oder in Umfangsrichtung) versetzten Anbindung mit den Blechfolien 1 bzw. Blechlagen 26 wird das unterschiedliche Ausdehnungsverhalten von Gehäuse 28 und Blechfolien 1 bzw. Blechlagen 26 ausgeglichen.

Figur 7 zeigt schematisch den Aufbau einer Abgasanlage für ein Automobil. Das Automobil weist eine Verbrennungskraftmaschine 40 auf, wobei als Kraftstoff Benzin, Diesel, Raps oder sonstige Energieträger eingesetzt werden können. Im Hubraum 43 (bzw. Verbrennungsraum) wird ein Abgas produziert, welches gegebenenfalls folgende Komponenten durchläuft, bevor es letztendlich an die Umgebung abgegeben wird:
- einen Turbolader 42 zur Verdichtung der Ansaugluft für die Verbrennungskraftmaschine 40,
- einen Strömungsmischer 37 mit einer Messvorrichtung 34,
- eine Partikelfalle 39,
- einen katalytischen Konverter 36,
- einen Adsorber 38 sowie
- einen weiteren katalytischen Konverter (z.B. Drei-Wege-Katalysator),
- wobei die einzelnen Komponenten zum Reinigen des Abgases durch eine Abgasleitung 41 miteinander verbunden sind.

Zur Beeinflussung der Verbrennungsvorgänge beziehungsweise der Wirkweise des der Abgasanlage 35 oder der Verbrennungskraftmaschine 40 werden Daten an eine Motorsteuerung 44 weitergeleitet.

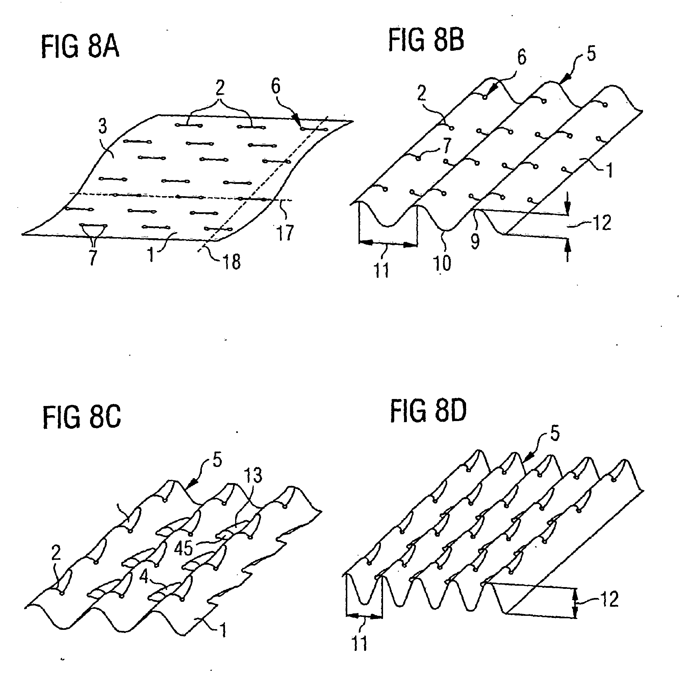

In Figur 8 sind schematisch die Fertigungsschritte dargestellt, die zur Herstellung der erfindungsgemäßen Blechfolie eingesetzt werden können.
- Schritt (A):: Ausgehend von einer im wesentlichen ebenen Blechfolie 1 werden in Reihen 18 und/oder in Linien 17 Schlitze 2 eingebracht, die im Innenbereich 3 der Blechfolie 1 liegen. Die Schlitze 2 sind dabei so gestaltet, dass in deren Randbereichen 6 jeweils eine Ausnehmung 7 vorgesehen ist.
- Schritt (B):: Die so vorbehandelte Blechfolie 1 wird nun einem formgebenden Fertigungsverfahren unterzogen, beispielsweise Wellwalzen, so dass die Oberflächenstruktur 5 gebildet ist. Die dargestellte Oberflächenstruktur 5 ist gekennzeichnet durch Wellenberge 9 und Wellentäler 10, die sich im wesentlichen parallel zueinander fortpflanzen. Die Oberflächenstruktur 5 bzw. die wellenähnliche Gestalt lässt sich anhand der Parameter Wellenlänge 11 und Wellhöhe 12 beschreiben. In der dargestellten Ausführungsform der Blechfolie 1 ist das Verhältnis von Welllänge 11 zur Wellhöhe 12 ca. 3,0.
- Schritt (C):: Schritt C zeigt die Blechfolie 1, wie sie nach einem zweiten formgebenden Fertigungsverfahren zur Ausbildung der Mikrostrukturen 4 vorliegt. Dazu wurden die auf den Wellenbergen 9 bzw. in den Wellentälern 10 positionierten Schlitze 2 als Begrenzung für die Mikrostruktur 4 ausgemacht und Umstülpungen im Material der Blechfolie 1 vorgenommen. Die Umstülpungen bilden Leitflächen 13 mit Öffnungen 45, wobei die Leitflächen 13 ausgehend von den Wellentälern 10 sich nach oben erstrecken und die Leitflächen 13 ausgehend von den Wellenbergen nach unten ragen.
- Schritt (D):: In einem letzten Schritt wird ein besonders kleines Verhältnis von Welllänge zu Wellhöhe 12 gebildet. Dabei ist es beispielsweise möglich, dass die Blechfolie 1 gestaucht wird, so dass die Oberflächenstruktur 5 deutlich kleinere Welllängen 11 aufweist. Im Hinblick auf die Herstellung solcher Blechfolien sei auch auf die (unveröffentlichte) DE 103 04 814 verwiesen.

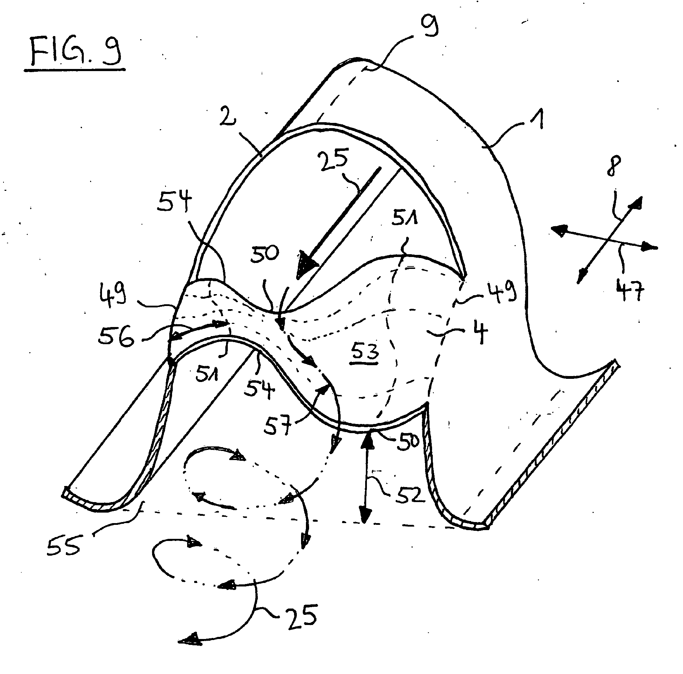

Figur 9 zeigt schematisch und perspektivisch eine Detailansicht einer Blechfolie 1 mit einer Mikrostruktur 4, welche einen Drall des Fluidstromes bewirkt (wie schematisch durch die Pfeile 25 angedeutet). Gezeigt ist eine Blechfolie 1 umfassend mindestens einen Schlitz 2, der in einen Innenbereich 3 der Blechfolie 1 angeordnet ist, wobei der mindestens eine Schlitz 2 zumindest teilweise eine Mikrostruktur 4 der Blechfolie 1 begrenzt, die aus einer Oberflächenstruktur 5 der Blechfolie 1 herausragt, welche dadurch gekennzeichnet ist, dass die Mikrostruktur 4 ein sphärisches Areal 53 bildet. Dieses Areal 53 bzw. die gebildete Fläche hat die Eigenschaft, dass das anströmende Fluid bzw. Abgas, welches häufig in laminarer Form strömt, nicht (nur) einfach in eine Richtung abgelenkt sondern der Strömungsfaden mit wenigstens einen Drall, einer Rotation oder einer Verwirbelung versehen wird. Während bei einer überwiegend stattfindenden Ablenkung des Strömungsfadens hin zu einer Kanalwand erhebliche Druckverluste in dem Kanal erzeugt werden, wird dies durch das wendelförmige Strömen des Fluides im Kanal nach einer entsprechenden Anregung durch das sphärische Areal 53 deutlich reduziert. Der Druckverlust spielt gerade im Automobilbau eine wesentliche Rolle, hat dieser doch direkten Einfluss auf die Motorleistung. An dieser Stelle ist darauf hinzuweisen, dass diese Blechfolie 1 mit einer ein sphärisches Areal 53 aufweisenden Mikrostruktur 4 auch unabhängig von den erfindungsgemäßen Ausnehmungen 7 im Randbereich 6 des Schlitzes 2 herstellbar ist, kann aber auch mit allen Aspekten der hier beschriebenen Blechfolien, Trägerkörper in vorteilhafter Weise kombiniert werden bzw. für die selbe Verwendung zum Einsatz gelangen.

Das sphärische Areal 53 lässt sich beispielsweise dadurch beschreiben, dass die Mikrostruktur 4 nicht eben ist, sondern weist (bei Betrachtung einer Schnittebene parallel zur Querrichtung 47, wie sie in Figur 9 dargestellt ist) mindestens einen Hochpunkt 51 und einen Tiefpunkt 50 auf. Dies gilt insbesondere an den Kanten 54 der Mikrostruktur 4. Die Hochpunkte 51 und Tierpunkte 50 lassen sich durch die Beträge der Höhe 52 voneinander unterscheiden, wobei damit insbesondere lokale Extrempunkte gemeint sind. Die Höhe 52 beschreibt dabei insbesondere den senkrechten Abstand bis zum Kanalboden 55 bzw. einer Ebene durch die Wellentäler 10 der Blechfolie 1.

Gemäß einer bevorzugten Ausgestaltung ist das sphärische Areal 53 nun so geformt, dass zumindest die Hochpunkte 51 oder die Tiefpunkte 50 verschiedener Schnittebenen (parallel zur Querrichtung 47 und durch die Mikrostruktur 4) nicht in Längsrichtung 8 fluchtend angeordnet sind. Das bedeutet beispielsweise, dass sich die Distanz 56 der Hochpunkte 51 und/oder der Tiefpunkte 50 zu einem Übergangsbereich 49 der Mikrostruktur 4 in Längsrichtung 8 ändert.

Gemäß einer Ausführungsform ist auch möglich, dass (zusätzlich) in zumindest einer Schnittebene durch die Mikrostruktur 4 parallel zur Längsrichtung 8 Hochpunkte 51 und Tiefpunkte 50 vorgesehen sind, also insbesondere kein geradliniger Verlauf der Mikrostruktur 4 vorliegt. Bevorzugt sind ist auch hier die Distanzen der Hochpunkte 51 und/oder der Tiefpunkte 50 hin zu den Kanten 54 nicht in allen Schnittebenen parallel zur Längsrichtung 8 gleich.

Entsprechend der in Figur 9 dargestellten Ausführungsform bilden die Tiefpunkte 50 eine Kontur 57, die dadurch gekennzeichnet ist, dass sie nicht parallel zur Längsrichtung 8 verläuft, sondern bevorzugt einer dreidimensionalen Bahn entspricht, die zumindest Abschnitte quer zur Längsrichtung 8 aufweist. Diese Kontur 57 stellt bevorzugt eine stetige Bahn dar, also weist keine Ecken, Kanten, etc. auf. Die Kontur 57 hat entlang ihres Verlaufes vorteilhafterweise eine variierende Höhe 52. Besonders vorteilhaft ist es, wenn die Kontur 57 mit einer ersten Höhe 52 und einer ersten Distanz 56 hin zum am nächsten benachbart angeordneten Übergangsbereich 49 an der Kante 54, auf welche das Fluid anströmt, startet und schließlich an der anderen Kante 54 eine zweite Distanz 56 aufweist, die größer ist. Insbesondere weist die Kontur 57 dort auch eine zweite Höhe 52 auf, die von der ersten Höhe 52 verschieden ist. Mit einer solchen Ausgestaltung der Mikrostruktur 4 erhält die damit kontaktierte Fluidströmung eine Ableitung gleichzeitig in beide Querrichtungen 47 (horizontal und vertikal) senkrecht zur Längsrichtung 8, wobei ein Strudel, ein Wirbel, ein Drall etc. erzeugt wird.

Die hier offenbarte Blechfolie beziehungsweise der hier offenbarte Trägerkörper zeichnet sich durch eine besonders hohe Lebensdauer im Abgassystem eines Automobils aus. Zudem ist es möglich, auf die jeweiligen Anwendungsgebiete exakt abgestimmte Strömungsprofile zu bewirken, so dass ein besonders effizienter bzw. extrem anpassungsfähiger Trägerkörper zum Reinigen des Abgases von Automobilen bereitgestellt wird.

### Bezugszeichenliste

- 1: Blechfolie
- 2: Schlitz
- 3: Innenbereich
- 4: Mikrostruktur
- 5: Oberflächenstruktur
- 6: Randbereich
- 7: Ausnehmung
- 8: Längsrichtung
- 9: Wellenberg
- 10: Wellental
- 11: Welllänge
- 12: Wellhöhe
- 13: Leitfläche
- 14: Winkel
- 15: Kreisbogen
- 16: Krümmungsradius
- 17: Linie
- 18: Reihe
- 19: Blechfoliendicke
- 20: Erstreckung
- 21: Trägerkörper
- 22: Kanal
- 23: Teilbereich
- 24: Querschnitt
- 25: Pfeil
- 26: Blechlage
- 27: Faserlage
- 28: Gehäuse
- 29: Abschnitt
- 30: Manschette
- 31: Beschichtung
- 32: Anbindungsbereich
- 33: Sektor
- 34: Messvorrichtung
- 35: Abgasanlage
- 36: Katalytischer Konverter
- 37: Strömungsmischer
- 38: Adsorber
- 39: Partikelfalle
- 40: Verbrennungskraftmaschine
- 41: Abgasleitung
- 42: Turbolader
- 43: Hubraum
- 44: Motorsteuerung
- 45: Öffnung
- 46: Partikel
- 47: Querrichtung
- 48: Strömungsprofil
- 49: Übergangsbereich
- 50: Tiefpunkt
- 51: Hochpunkt
- 52: Höhe
- 53: Areal
- 54: Kante
- 55: Kanalboden
- 56: Distanz
- 57: Kontur

## Patentansprüche

1. Blechfolie (1) umfassend mindestens einen Schlitz (2), der in einen Innenbereich (3) der Blechfolie (1) angeordnet ist, wobei der mindestens eine Schlitz (2) zumindest teilweise eine Mikrostruktur (4) der Blechfolie (1) begrenzt, die aus einer Oberflächenstruktur (5) der Blechfolie (1) herausragt, wobei die Mikrostruktur (4) ein sphärisches Areal (53) bildet.

2. Blechfolie (1) nach Anspruch 1, **dadurch gekennzeichnet, dass** die Mikrostruktur (4) bei Betrachtung einer Schnittebene parallel zur Querrichtung (47) mindestens einen Hochpunkt (51) und einen Tiefpunkt (50) aufweist.

3. Blechfolie (1) nach Anspruch 2, **dadurch gekennzeichnet, dass** das sphärische Areal (53) so geformt, dass zumindest die Hochpunkte (51) oder die Tiefpunkte (50) verschiedener Schnittebenen parallel zur Querrichtung (47) nicht in Längsrichtung (8) fluchtend angeordnet sind.

4. Blechfolie (1) nach einem der vorstehenden Ansprüche, **dadurch gekennzeichnet, dass** in zumindest einer Schnittebene durch die Mikrostruktur (4) parallel zur Längsrichtung (8) Hochpunkte (51) und Tiefpunkte (50) vorgesehen sind.

5. Blechfolie (1) nach einem der vorstehenden Ansprüche, **dadurch gekennzeichnet, dass** die Tiefpunkte (50) eine Kontur (57) bilden, die nicht parallel zur Längsrichtung (8) verläuft, sondern bevorzugt einer dreidimensionalen Bahn entspricht, die zumindest Abschnitte quer zur Längsrichtung (8) aufweist.

6. Blechfolie (1) nach Anspruch 5, **dadurch gekennzeichnet, dass** das Kontur (57) stellt eine stetige Bahn ist

7. Blechfolie (1) nach Anspruch 5 oder 6, **dadurch gekennzeichnet, dass** das Kontur (57) entlang ihres Verlaufes eine variierende Höhe (52) hat.

8. Trägerkörper (21) für eine Komponente zum Reinigen von Abgasen umfassend eine Mehrzahl von zumindest teilweise strukturierten Blechfolien (1), die so gestapelt und/oder gewunden sind, dass er für ein Fluid durchströmbar ist, **dadurch gekennzeichnet, dass** zumindest eine der Mehrzahl von Blechfolien (1) eine Blechfolie (1) nach einem der Ansprüche 1 bis 7 ist.

9. Trägerkörper (21) nach Anspruch 8, **dadurch gekennzeichnet, dass** dieser zusätzlich zu der wenigstens einen Blechfolie (1) zumindest ein Element aus der folgenden Gruppe von Elementen umfasst:
- wenigstens eine glatte Blechlage (26), die insbesondere im wesentlichen an den Extrema (9, 10) der Oberflächenstruktur (5) der Blechfolie (1) anliegt, bevorzugt mit dieser verbunden ist,
- wenigstens eine poröse Faserlage (27), die insbesondere im wesentlichen an den Extrema (9, 10) der Oberflächenstruktur (5) der Blechfolie (1) anliegt, bevorzugt mit dieser verbunden ist,
- wenigsten ein Gehäuse (28), welches den Trägerkörper (21) zumindest in einem Abschnitt (29) umgibt,
- wenigstens eine Manschette (30), die den Trägerkörper (21) zumindest in einem Anbindungsbereich (32) umgibt und zur Anbindung an ein Gehäuse (28) dient,
- wenigstens eine Beschichtung (31), die in zumindest einem Sektor (33) des Trägerkörpers (21) vorgesehen ist,
- wenigstens eine Messvorrichtung (34).

10. Abgasanlage (35) mit einem Trägerkörper (21) nach Anspruch 8 oder 9 als eine Komponente aus der Gruppe der folgenden Komponenten zum Reinigen von Abgasen:
- Katalytischer Konverter (36),
- Strömungsmischer (37),
- Adsorber (38),
- Partikelfalle (39).

## Claims

1. Metal sheet (1) comprising at least one slit (2) arranged in an inner region (3) of the metal sheet (1), wherein the at least one slit (2) at least partially delimits a microstructure (4) of the metal sheet (1), the microstructure (4) projecting out of a surface structure (5) of the metal sheet (1), being **characterized in that** the microstructure (4) forms a spherical area (53).

2. Metal foil (1) as claimed in claim 1, **characterized in that** the microstructure (4), when a sectional plane parallel to the transverse direction (47) is being considered, has at least one high point (51) and one low point (50).

3. Metal foil (1) as claimed in claim 2, **characterized in that** the spherical area (53) is shaped in such a way that at least the high points (51) or the low points (50) of various sectional planes which are parallel to the transverse direction (47) are not aligned in the longitudinal direction (8).

4. Metal foil (1) as claimed in one of the preceding claims, **characterized in** high points (51) and low points (50) are provided in at least one sectional plane through the microstructure (4), the sectional plane being parallel to the longitudinal direction (8).

5. Metal foil (1) as claimed in one of the preceding claims, **characterized in that** the low points (50) form a contour (57) that does not run parallel to the longitudinal direction (8), but preferably corresponds to a three dimensional path which has at least portions transversally to the longitudinal direction (8).

6. Metal foil (1) as claimed in claim 5, **characterized in that** the contour (57) constitutes a continuous path.

7. Metal foil (1) as claimed in claim 5 or 6, **characterized in that** the contour (57) has a varying height (52) along its run.

8. A carrier body (21) for a component for the purification of exhaust gases comprising a plurality of at least partially structured metal sheets (1) which are stacked and/or wound in such a way that a fluid is capable of flowing through said carrier body, **characterized in that** at least one of the plurality of metal sheets (1) is a metal sheet (1) as claimed in one of claims 1 to 7.

9. The carrier body (21) as claimed in claim 8, **characterized in that** this comprises in addition to the at least one metal sheet (1), at least one element from the following group of elements:
- at least one smooth metal layer (26) which, in particular, bears essentially against the extremes (9, 10) of the surface structure (5) of the metal sheet (1), preferably is connected to this.
- at least one porous fibre layer (27) which, in particular, bears essentially against the extremes (9, 10) of the surface structure (5) of the metal sheet (1), preferably is connected to this,
- at least one housing (28) which surrounds the carrier body (21) at least in a portion (29),
- at least one sleeve (30) which surrounds the carrier body (21) at least in a connecting region (32) and serves as a connection to a housing (28),
- at least one coating (31) which is provided in at least one sector (33) of the carrier body (21),
- at least one measuring device (34).

10. The use of a carrier body (21) as claimed in claim 8 or 9 in an exhaust system (35) as a component from the group of the following components for the purification of exhaust gas:
- catalytic converter (36),
- flow mixer (37),
- adsorber (38),
- particle trap (39).

## Revendications

1. Feuille de tôle (1) comportant au moins une fente (2), qui est agencée dans une région intérieure (3) de la feuille de tôle (1), l'au moins une fente (2) limitant au moins partiellement une microstructure (4) de la feuille de tôle (1) qui émerge hors d'une structure de surface (5) de la feuille de tôle (1), la microstructure (4) formant une aire sphérique (53).

2. Feuille de tôle (1) selon la revendication (1), **caractérisée en ce qu'**en regardant un plan d'intersection parallèle à la direction transversale (47) la microstructure (4) a au moins un maximum (51) et un minimum (50).

3. Feuille de tôle (1) selon la revendication 2, **caractérisée en ce que** l'aire sphérique (53) est formée de manière telle, qu'au moins les maxima (51) ou les minima (50) de plans d'intersection différents qui sont agencés de manière parallèle par rapport à la direction transversale (47), ne sont pas alignés en direction longitudinale (8).

4. Feuille de tôle (1) selon l'une des revendications précédentes, **caractérisée en ce que** des maxima (51) et des minima (50) sont prévus dans au moins un plan d'intersection grâce à la microstructure (4), le plan d'intersection étant parallèle à la direction longitudinale.

5. Feuille de tôle (1) selon l'une des revendications précédentes, **caractérisée en ce que** les minima (50) forment un contour (57) qui ne s'étend pas parallèlement à la direction longitudinale 8, mais correspond de préférence à un trajet tridimensionnel qui a au moins des sections transversales à la direction longitudinale (8).

6. Feuille de tôle (1) selon la revendication 5, **caractérisée en ce que** le contour (57) représente un trajet continu.

7. Feuille de tôle (1) selon la revendication 5 ou 6, **caractérisée en ce que** le contour (57) a une hauteur (52) qui varie le long de son allure.

8. Corps support (21) pour un composant destiné à l'épuration de gaz d'échappement, comportant une pluralité de feuilles de tôle (1) au moins partiellement structurées (1) qui sont empilées et/ou enroulées de manière telle que le corps support est traversable pour un fluide, **caractérisé en ce qu'**au moins une feuille de tôle de la pluralité de feuilles de tôle (1) est une feuille de tôle (1) selon l'une des revendications 1 à 7.

9. Corps support (21) selon la revendication 8, **caractérisé en ce qu'**en plus de l'au moins une feuille de tôle (1) celui-ci comporte au moins un élément du groupe suivant d'éléments :
- au moins une couche de tôle lisse (26) qui s'applique notamment sensiblement contre les extrema (9, 10) de la structure de surface (5) de la feuille de tôle (1), qui est de préférence reliée à celle-ci,
- au moins une couche de fibres poreuses (27), qui s'applique notamment sensiblement contre les extrema (9, 10) de la structure de surface (5) de la feuille de tôle (1), qui est de préférence reliée à celle-ci,
- au moins un boîtier (28) qui entoure le corps support (21) au moins dans une section (29),
- au moins une manchette (30) qui entoure le corps support (21) au moins dans une région de connexion (32) et qui sert à la connexion à un boîtier (28),
- au moins un revêtement (31) qui est prévu dans au moins un secteur (33) du corps support (21),
- au moins un dispositif de mesure (34).

10. Système de gaz d'échappement (35) avec un corps support (21) selon la revendication 8 ou 9 comme composant du groupe de composants suivants pour l'épuration de gaz d'échappement :
- convertisseur catalytique (36),
- mélangeur de flux (37),
- adsorbent (38),
- piège à particules (39).
